# FASCICULE DE BREVET EUROPEEN

(11) **EP 4 291 539 B1**
(45) Date de publication et mention de la délivrance du brevet: **26.02.2025**
(21) Numéro de dépôt: 22708197.3
(22) Date de dépôt: 09.02.2022
(51) Int. Cl.: C03C 17/36

(54) **SUBSTRAT TRANSPARENT REVETU D'UN EMPILEMENT DE COUCHES MINCES**
TRANSPARENTES SUBSTRAT MIT EINER BESCHICHTUNG AUS EINEM DÜNNSCHICHTSTAPEL
TRANSPARENT SUBSTRATE COATED WITH A STACK OF THIN LAYERS

(30) Priorité: 10.02.2021 FR 2101265
(43) Date de publication de la demande: 20.12.2023
(73) Titulaire: Saint-Gobain Glass France, 92400 Courbevoie (FR)
(72) Inventeur: BARRES, Thomas, 92600 ASNIERES SUR SEINE (FR)
(74) Mandataire: Saint-Gobain Recherche
(86) Numéro de dépôt international: PCT/FR2022/050232
(87) Numéro de publication internationale: WO 2022/171956

(56) Documents cités:
- WO-A1-2013/104439
- WO-A1-2017/042463
- WO-A1-2018/047037
- WO-A1-2018/165357
- US-A1- 2019 218 140

## Description

L'invention concerne un substrat transparent revêtu d'un empilement de couches minces comprenant une couche fonctionnelle à base d'argent ainsi qu'un vitrage comprenant un tel substrat.

L'invention concerne plus particulièrement l'utilisation de tels substrats pour fabriquer des vitrages d'isolation thermique renforcée présentant un facteur solaire élevé. De tels vitrages sont par exemple destinés aux climats froids pour équiper les bâtiments, en vue notamment de diminuer l'effort de chauffage en hiver (vitrages dits « bas-émissifs») et de maximiser l'apport solaire gratuit.

Le facteur solaire SHGC est défini comme le rapport entre le gain en énergie solaire entrant dans le local par le vitrage et l'énergie solaire incidente. Selon la norme NFRC 200-2017, le gain en énergie solaire est la somme du flux énergétique transmis directement à travers le vitrage et du flux énergétique absorbé puis réémis vers l'intérieur par le vitrage.

Un type d'empilement de couches minces connu pour conférer de telles propriétés d'isolation thermique est constitué d'une couche fonctionnelle à base d'argent (ou couche d'argent).

Les couches fonctionnelles à base d'argent sont utiles à plusieurs titres : en réfléchissant le rayonnement infrarouge, thermique ou solaire, elles impartissent au matériau des fonctions de basse émissivité ou de contrôle solaire. Conductrices de l'électricité, elles permettent également d'obtenir des matériaux conducteurs, par exemple des vitrages chauffants ou des électrodes.

Les couches fonctionnelles à base d'argent sont déposées entre des revêtements à base de matériaux diélectriques (ci-après revêtement diélectrique) qui comprennent généralement plusieurs couches diélectriques permettant d'ajuster les propriétés optiques de l'empilement et de conserver une transmission élevée dans le domaine visible. Ces couches diélectriques permettent en outre de protéger les couches d'argent des agressions chimiques ou mécaniques.

La demande WO 2012/127162, appartenant à la déposante, divulgue un substrat transparent muni d'un empilement de couches minces comprenant une couche d'argent disposée entre deux revêtements diélectriques non métalliques particuliers permettant d'augmenter le facteur solaire d'un vitrage équipé d'un tel substrat et d'obtenir une coloration acceptable, notamment en transmission. A cette fin, l'empilement comprend de préférence :
- un revêtement diélectrique inférieur, situé en dessous de la couche d'argent, comprenant au moins une couche à haut indice de réfraction, en matériau d'indice de réfraction supérieur ou égal à 2,20,
- un revêtement diélectrique supérieur, situé au-dessus de la couche d'argent comprenant au moins la séquence de couches minces haut et bas indices déposées dans l'ordre suivant au-dessus de la couche à base d'argent :
- au moins une couche à haut indice de réfraction, en matériau d'indice de réfraction supérieur ou égal à 2,20,
- au moins une couche à bas indice de réfraction, en matériau d'indice de réfraction inférieur ou égal à 1,70.

La demande WO2017/42463 appartenant également à la déposante, vise également des substrats transparents revêtus permettant d'augmenter le facteur solaire du vitrage. L'empilement suivant est par exemple décrit à l'exemple 1 : Substrat / Si₃N₄ / TiOx / SiZrN / ZnO / Ag / NiCr / ZnO / TiOx / SiO₂. Le facteur solaire est cependant insuffisant.

On connait également le document WO 2018/165357 (Guardian) qui divulgue un article revêtu d'un empilement à basse émissivité, et notamment l'empilement suivant : Substrat / SiN / ZrSiN / TiO₂ / ZnAlO / Ag / barrière TiO₂ / ZrSiN / SiN / SiO₂. La couche ZrSiN doit comporter plus de Zr que de Si et a dès lors un indice proche de celui de la couche de TiO₂.

Le document WO 2018/047037 A1 (Guardian) divulgue aussi un substrat transparent revêtu d'un empilement à basse émissivité.

La demande WO 2007/101964 divulgue, dans le cas où le revêtement diélectrique situé en dessous de la couche d'argent comprend au moins une couche diélectrique à base de nitrure, notamment de nitrure de silicium et/ou d'aluminium, des revêtements diélectriques comprenant :
- des couches de mouillage destinées à favoriser le mouillage et la nucléation de la couche d'argent, par exemple une couche à base d'oxyde de zinc cristallisé,
- des couches de lissage en un oxyde mixte situé sous la couche de mouillage contribuant à la croissance adéquate de la couche d'argent au-dessus de la couche de mouillage.

Dans ce document, toutes les couches minces du revêtement diélectrique supérieur, présentant une épaisseur supérieure à 5 nm, ont des indices de réfraction sensiblement égaux.

De ce fait, les revêtements diélectriques constitués de telles couches minces forment un milieu d'indice de réfraction sensiblement homogène bien que les matériaux qui les constituent soient différents.

Il existe une demande forte de vitrage combinant les propriétés suivantes :
- une transmission lumineuse élevée, notamment d'au moins 70 %, 75 % voire 78 %,
- un facteur solaire élevé,
- une faible émissivité, et
- une faible déperdition thermique se traduisant par des coefficients Ug faibles.

Le facteur solaire du vitrage « FS ou g » correspond au rapport en % entre l'énergie totale entrant dans le local à travers le vitrage et l'énergie solaire incidente. Le facteur solaire mesure donc la contribution d'un vitrage à l'échauffement de la « pièce ». Plus le facteur solaire est petit, plus les apports solaires sont faibles.

Le coefficient de déperdition thermique également appelé « valeur Ug » exprime le flux thermique par mètre carré de vitrage causé par une différence de température existant entre l'environnement extérieur et l'intérieur séparé par le vitrage. Plus cette valeur est basse, plus les déperditions sont réduites et meilleure est l'isolation.

Les performances des vitrages bas émissifs reposent sur le compromis entre le facteur solaire qu'il faut maximiser (apport d'énergie solaire) et la valeur Ug qu'il faut obtenir la plus basse possible (coefficient de transmission thermique indiquant les pertes thermiques de le vitrage).

L'obtention en combinaison d'un faible facteur solaire et de faibles déperditions thermiques est délicate. Pour obtenir de faibles déperdition thermique, en particulier avec des empilements à une seule couche fonctionnelle à base d'argent, il faut diminuer l'émissivité de l'empilement sans augmenter l'absorption ou la réflexion.

Or, il est très difficile de diminuer l'émissivité sans diminuer la transmission lumineuse. En effet, augmenter l'épaisseur des couches d'argent permet d'abaisser l'émissivité et donc d'obtenir un coefficient de transmission thermique Ug plus faible mais cela s'opère au détriment de la transmission lumineuse. Dans la mesure où la diminution de la transmission lumineuse entraine également une diminution du facteur solaire cette solution ne permet pas de maximiser les apports solaires.

Ainsi, le développement de vitrage à faible valeur Ug présentant un facteur solaire élevé est essentiel pour améliorer l'efficacité énergétique des bâtiments incorporant ces vitrages.

Le demandeur a découvert, de manière surprenante, que lorsque le revêtement diélectrique sous la couche fonctionnelle est formé de couches qui forment un gradient d'indice croissant en partant du substrat et que le revêtement diélectrique au-dessus de la couche fonctionnelle est formé de couches qui forment un gradient d'indice décroissant, il est possible d'augmenter le facteur solaire tout en conservant une faible émissivité. Il est alors également envisageable de diminuer l'épaisseur de la couche fonctionnelle.

L'invention concerne un substrat transparent revêtu d'un empilement de couches minces tel que défini dans le jeu de revendications. L'empilement de couche mince comprend, à partir du substrat, un revêtement diélectrique inférieur, une couche métallique fonctionnelle à base d'argent et un revêtement diélectrique supérieur, chaque revêtement diélectrique comportant plusieurs couches diélectriques. Le revêtement diélectrique inférieur comporte une succession d'au moins trois couches diélectriques ayant des indices de réfraction croissants, la différence d'indice entre les trois couches étant au moins de 0,15, une couche de lissage et une couche de mouillage, de préférence à base d'oxyde de zinc (ZnO). Le revêtement diélectrique supérieur comprend une couche à base d'oxyde de zinc et une succession d'au moins deux couches ayant des indices de réfraction décroissants.

La solution de l'invention constituée par le choix de séquences de couches diélectriques particulières permet d'optimiser le filtre optique et d'augmenter la conductivité de l'argent. Ces deux améliorations concourent à augmenter le facteur solaire sans impacter le coefficient de déperdition thermique Ug.

Le substrat transparent revêtu selon l'invention peut présenter les caractéristiques suivantes seules ou en combinaison :
- les trois couches diélectriques ayant des indices de réfraction croissants du revêtement diélectrique inférieur présentent chacune une épaisseur supérieure à 3 nm,
- les deux couches diélectriques ayant des indices de réfraction décroissants du revêtement diélectrique inférieur présentent chacune une épaisseur supérieure à 3 nm,
- la couche de lissage est à base d'un oxyde mixte comprenant au moins deux métaux choisis parmi l'étain Sn, le zinc Zn, le gallium Ga et l'indium In, de préférence une couche d'oxyde mixte à base de Sn et de Zn,
- la couche de lissage présente une épaisseur supérieure à 4 nm,
- chaque revêtement diélectrique comprend au moins une couche haut-indice à base d'un oxyde ou nitrure, présentant un indice de réfraction supérieur à 2,20, de préférence supérieur à 2,25 et une épaisseur supérieure à 5 nm,
- chaque revêtement diélectrique comprend au moins une couche diélectrique à base d'oxyde ou de nitrure et présentant un indice de réfraction inférieur à 2,15, de préférence inférieure à 2,05 et une épaisseur supérieure à 3 nm,
- le revêtement diélectrique supérieur comprend une succession d'au moins trois couches d'indices décroissants, chacune d'épaisseur supérieure à 5 nm, dont la différence d'indice est supérieure à 0,15, voire supérieure à 0,20,
- le revêtement diélectrique supérieur comprend une couche d'indice de réfraction inférieure à 1,70 et présentant une épaisseur supérieure à 5 nm ou 10 nm,
- le revêtement diélectrique supérieur comporte trois couches de diélectrique, successivement de haut indice, d'indice intermédiaire et de bas indice ; la couche d'indice intermédiaire ayant une épaisseur :
   - supérieure à l'épaisseur de la couche de haut indice, et
   - supérieure à l'épaisseur de la couche de bas indice,
- le revêtement diélectrique inférieur comprend :
   - une couche diélectrique présentant un indice de réfraction inférieur 2,20,
   - une couche diélectrique présentant un indice de réfraction compris entre 2,20 à 2,40,
   - une couche diélectrique présentant un indice de réfraction supérieur à 2,40,
   - une couche de lissage,
   - une couche de mouillage,
- le revêtement diélectrique inférieur comprend :
   - une couche diélectrique présentant un indice de réfraction inférieur 2,20 choisie parmi les couches à base de nitrure de silicium,
   - une couche diélectrique présentant un indice de réfraction compris entre 2,20 à 2,40 choisie parmi les couches à base de nitrure de silicium et de zirconium, de préférence située au contact de la couche de nitrure de silicium,
   - une couche diélectrique présentant un indice de réfraction supérieur à 2,40 choisie parmi les couches à base d'oxyde, de préférence située au contact de la couche de nitrure de silicium et de zirconium,
   - une couche de lissage à base d'oxyde de zinc et d'étain, de préférence située au contact de la couche à base d'oxyde,
   - une couche de mouillage à base d'oxyde de zinc, de préférence située au contact de la couche à base d'oxyde de zinc et d'étain,
- le revêtement diélectrique inférieur comprend :
   - une couche diélectrique présentant un indice de réfraction inférieur 2,20 choisie parmi les couches à base de nitrure de silicium présentant une épaisseur comprise entre 2 et 15 nm ou entre 2 et 10 nm,
   - une couche diélectrique présentant un indice de réfraction compris entre 2,20 à 2,40 choisie parmi les couches à base de nitrure de silicium et de zirconium présentant une épaisseur comprise entre 5 et 20 nm ou entre 10 et 20 nm, de préférence située au contact de la couche de nitrure de silicium,
   - une couche diélectrique présentant un indice de réfraction supérieur à 2,40 choisie parmi les couches à base d'oxyde présentant une épaisseur comprise entre 5 et 20 nm ou entre 10 et 20 nm, de préférence située au contact de la couche de nitrure de silicium et de zirconium,
   - une couche de lissage à base d'oxyde de zinc et d'étain présentant une épaisseur comprise entre 2 et 15 nm, entre 3 et 10 nm ou entre 3 et 8 nm, de préférence située au contact de la couche à base d'oxyde,
   - une couche de mouillage à base d'oxyde de zinc présentant une épaisseur comprise entre 2 et 15 nm, entre 3 et 10 nm ou entre 3 et 8 nm, de préférence située au contact de la couche à base d'oxyde de zinc et d'étain,
- le revêtement diélectrique supérieur comprend :
   - une couche à base d'oxyde de zinc,
   - une couche diélectrique présentant un indice de réfraction supérieur 2,20,
   - une couche diélectrique présentant un indice de réfraction inférieur à 2,20,
- le revêtement diélectrique supérieur comprend :
- une couche à base d'oxyde de zinc,
   - une couche diélectrique présentant un indice de réfraction supérieur 2,20,
   - une couche diélectrique présentant un indice de réfraction inférieur à 2,20,
   - éventuellement une couche diélectrique présentant un indice de réfraction inférieur à 1,70,
- le revêtement diélectrique supérieur comprend :
   - une couche à base d'oxyde de zinc,
   - une couche diélectrique présentant un indice de réfraction supérieur 2,20 choisie parmi les couches à base de nitrure de silicium et de zirconium, de préférence située au contact de la couche à base d'oxyde de zinc,
   - une couche diélectrique présentant un indice de réfraction inférieur à 2,20 choisie parmi les couches à base de nitrure de silicium, de préférence située au contact de la couche à base de nitrure de silicium et de zirconium,
   - une couche diélectrique présentant un indice de réfraction inférieur à 1,70 choisie parmi les couches à base d'oxyde de silicium, de préférence située au contact de la couche à base de nitrure de silicium,
- le revêtement diélectrique supérieur comprend :
   - une couche à base d'oxyde de zinc présentant une épaisseur comprise entre 2 et 15 nm, entre 3 et 10 nm ou entre 5 et 10 nm,
   - une couche diélectrique présentant un indice de réfraction supérieur 2,20 choisie parmi les couches à base de nitrure de silicium et de zirconium présentant une épaisseur comprise entre 5 et 40 nm, entre 5 et 20 nm ou entre 10 et 15, de préférence située au contact de la couche à base d'oxyde de zinc,
   - une couche diélectrique présentant un indice de réfraction inférieur à 2,20 choisie parmi les couches à base de nitrure de silicium présentant une épaisseur comprise entre 5 et 60 nm, entre 10 et 50 ou entre 20 et 40, de préférence située au contact de la couche à base de nitrure de silicium et de zirconium,
   - une couche diélectrique présentant un indice de réfraction inférieur à 1,70 choisie parmi les couches à base d'oxyde de silicium présentant une épaisseur comprise entre 5 et 150 nm, entre 10 et 100 ou entre 15 et 100, de préférence située au contact de la couche à base de nitrure de silicium,
- l'empilement comporte, en outre, une couche de protection supérieure,
- l'empilement comporte une seule couche métallique fonctionnelle,
- l'empilement comporte, en outre, une couche de blocage déposée directement sur la couche métallique fonctionnelle à base d'argent, dont l'épaisseur est inférieure à 5,0 nm, inférieure à 4,0 nm, inférieure à 3,0 nm, inférieure à 2,5 nm, inférieure à 2,0 nm, de manière encore préférée inférieure à 1,5 nm,
- la couche métallique fonctionnelle à base d'argent a une épaisseur comprise entre 5 et 20 nm, de préférence entre 6 et 10 nm, de manière encore préférée entre 7 et 8,5 nm.

Selon un mode de réalisation avantageux, le revêtement diélectrique supérieur comprend au moins la séquence de couches minces déposées dans l'ordre suivant au-dessus de la couche fonctionnelle :
- au moins une couche à haut indice de réfraction (ci-après « couche haut indice »), en matériau d'indice de réfraction supérieur ou égal à 2,20, l'épaisseur physique de la couche à haut indice de réfraction étant comprise entre 10 et 40 nm,
- au moins une couche à bas indice de réfraction (ci-après « couche haut indice »), en matériau d'indice de réfraction inférieur ou égal à 2,00, l'épaisseur physique de la couche à bas indice de réfraction étant comprise entre 15 et 100 nm.

Selon un mode de réalisation avantageux, le revêtement diélectrique supérieur, situé au-dessus de la couche métallique fonctionnelle à base d'argent, comprend :
- une couche à base d'oxyde de zinc,
- une couche haut-indice,
- une couche présentant un indice de réfraction intermédiaire, et
- une couche présentant un indice de réfraction inférieur à 2,0.

De préférence toutes les couches diélectriques du revêtement diélectrique supérieur, déposée au-dessus de la couche d'oxyde de zinc, forment un gradient d'indice décroissant.

En particulier, chaque couche du revêtement diélectrique inférieur ayant une épaisseur supérieure à 3 nm autre que la couche de mouillage et la couche de lissage, forme un gradient d'indice croissant.

L'empilement est déposé par pulvérisation cathodique assistée par un champ magnétique (procédé magnétron). Selon ce mode de réalisation avantageux, toutes les couches de l'empilement sont déposées par pulvérisation cathodique assistée par un champ magnétique.

L'invention concerne également :
- un vitrage selon l'invention monté sur un véhicule ou sur un bâtiment, et
- le procédé de préparation d'un vitrage feuilleté selon l'invention,
- l'utilisation d'un vitrage feuilleté selon l'invention en tant que vitrage de contrôle solaire pour le bâtiment ou les véhicules,
- un bâtiment, un véhicule comprenant un vitrage selon l'invention.

Les caractéristiques préférées qui figurent dans la suite de la description sont applicables aussi bien au substrat selon l'invention que, le cas échéant, au vitrage, au procédé, à l'utilisation, au bâtiment ou au véhicule selon l'invention.

Toutes les caractéristiques lumineuses décrites sont obtenues selon les principes et méthodes de la norme ISO 9050 se rapportant à la détermination des caractéristiques lumineuses et solaires des vitrages utilisés dans le verre pour la construction.

De manière conventionnelle, les indices de réfraction sont mesurés à une longueur d'onde de 550 nm.

Selon l'invention, deux éléments tels que des couches ou des substrats ont des indices de réfraction sensiblement égaux, lorsque la valeur absolue de la différence entre les indices de réfraction des deux matériaux constituant lesdites couches ou substrats à 550 nm est inférieure ou égale à 0,15.

Selon l'invention, on considère que des couches ont des indices de réfraction différents lorsque la valeur absolue de la différence entre les indices de réfraction mesurés à 550 nm des deux matériaux les constituant est supérieure ou égale à 0,15, supérieure ou égale à 0,25, supérieure à 0,30, supérieure à 0,40, supérieure à 0,50, supérieure à 0,60, supérieure à 0,70 ou supérieure à 0,80.

A défaut de stipulation spécifique, les expressions « au-dessus » et « en-dessous » ne signifient pas nécessairement que deux couches et/ou revêtements sont disposés au contact l'un de l'autre. Lorsqu'il est précisé qu'une couche est déposée « au contact » d'une autre couche ou d'un revêtement, cela signifie qu'il ne peut y avoir une (ou plusieurs) couche(s) intercalée(s) entre ces deux couches (ou couche et revêtement).

Dans la présente description, sauf autre indication, l'expression « à base de », utilisée pour qualifier un matériau ou une couche quant à ce qu'il ou elle contient, signifie que la fraction massique du constituant qu'il ou elle comprend est d'au moins 50%, en particulier au moins 70%, de préférence au moins 90%.

Ainsi, l'épaisseur optique totale du revêtement antireflet est constituée de la somme de toutes les épaisseurs optiques des couches diélectriques constituant ce revêtement.

L'empilement est déposé par pulvérisation cathodique assistée par un champ magnétique (procédé magnétron). Selon ce mode de réalisation avantageux, toutes les couches de l'empilement sont déposées par pulvérisation cathodique assistée par un champ magnétique.

Sauf mention contraire, les épaisseurs évoquées dans le présent document sont des épaisseurs physiques et les couches sont des couches minces. On entend par couche mince, une couche présentant une épaisseur comprise entre 0,1 nm et 100 micromètres.

Dans toute la description le substrat selon l'invention est considéré posé horizontalement. L'empilement de couches minces est déposé au-dessus du substrat. Le sens des expressions « au-dessus » et « en-dessous » et « inférieur » et « supérieur » est à considérer par rapport à cette orientation. A défaut de stipulation spécifique, les expressions « au-dessus » et « en-dessous » ne signifient pas nécessairement que deux couches et/ou revêtements sont disposés au contact l'un de l'autre. Lorsqu'il est précisé qu'une couche est déposée « au contact » d'une autre couche ou d'un revêtement, cela signifie qu'il ne peut y avoir une ou plusieurs couches intercalées entre ces deux couches.

La couche fonctionnelle métallique à base d'argent comprend au moins 95,0 %, de préférence au moins 96,5 % et mieux au moins 98,0 % en masse d'argent par rapport à la masse de la couche fonctionnelle. De préférence, la couche métallique fonctionnelle à base d'argent comprend moins de 1,0 % en masse de métaux autres que de l'argent par rapport à la masse de la couche métallique fonctionnelle à base d'argent.

De manière particulière, la couche métallique fonctionnelle à base d'argent a une épaisseur comprise entre 5 et 20 nm, de préférence entre 6 et 10 nm, de manière encore préférée entre 7 et 8,5 nm. Les couches fonctionnelles métalliques à base d'argent ont une épaisseur :
- supérieure à 5 nm, 6, nm, 7 nm, 8 nm, 9,nm, 10 nm, 11 nm, 12 nm, 13 nm, 14 nm, 15 nm ou 16 nm, et/ou
- inférieure à 25 nm, 22 nm, 20 nm, 18, nm.

L'empilement peut encore comporter, en outre, une couche de blocage déposée directement sur la couche métallique fonctionnelle à base d'argent,
Selon ce mode de réalisation, la couche de blocage est choisie parmi les couches métalliques, les couches de nitrure métallique, les couches d'oxyde métallique et les couches d'oxynitrure métallique à base d'un ou plusieurs éléments choisis parmi le niobium Nb, le tantale Ta, le titane Ti, le chrome Cr ou le nickel Ni ou à base d'un alliage obtenu à partir d'au moins deux de ces métaux. Lorsque ces couches de blocage sont déposées sous forme métallique, nitrurée, oxynitrurée ou sous oxydée, ces couches peuvent subir une oxydation partielle ou totale selon leur épaisseur et la nature des couches qui les entourent, par exemple, au moment du dépôt de la couche suivante ou par oxydation au contact de la couche sous-jacente.

Les couches de blocage sont choisies parmi :
- les couches métalliques à base d'un métal ou d'un alliage métallique, les couches de nitrure métallique, et les couches d'oxynitrure métallique d'un ou plusieurs éléments choisis parmi le titane, le zinc, l'étain, le nickel, le chrome et le niobium,
- les couches d'oxyde métallique d'un ou plusieurs éléments choisis parmi le titane, le nickel, le chrome et le niobium.

Les couches de blocage peuvent notamment être, telles que déposées, des couches de Ti, TiN, TiOx, Nb, NbN, Ni, NiN, Cr, CrN, NiCr, NiCrOx, NiCrN, SnZnN.

De préférence, les couches de blocage sont à base de titane et sont des couches métalliques ou des couches d'oxyde métallique, de préférence, sous stœchiométrique en oxygène.

Selon un mode de réalisation avantageux, l'empilement ne comprend pas de couche de blocage située en-dessous et au contact de la couche fonctionnelle métallique à base d'argent.

L'épaisseur de la couche de blocage est en général comprise entre 0,1 et 5,0 nm, de préférence :
- d'au moins 0,1 nm ou d'au moins 0,5 nm et/ou
- d'au plus 5,0 nm ou d'au plus 2,0 nm, d'au plus 1,0 nm.

Les revêtements diélectriques comprennent des couches diélectriques. Par « couche diélectrique » au sens de la présente invention, il faut comprendre que du point de vue de sa nature, le matériau est « non métallique », c'est-à-dire n'est pas un métal. Dans le contexte de l'invention, ce terme désigne un matériau présentant un rapport n/k sur toute la plage de longueur d'onde du visible (de 380 nm à 780 nm) égal ou supérieur à 5. n désigne l'indice de réfraction réel du matériau à une longueur d'onde donnée et k représente la partie imaginaire de l'indice de réfraction à une longueur d'onde donnée ; le rapport n/k étant calculé à une longueur d'onde donnée identique pour n et pour k.

L'épaisseur d'un revêtement diélectrique correspond à la somme des épaisseurs des couches le constituant. De préférence, les revêtements diélectriques présentent une épaisseur supérieure à 10 nm, supérieure à 15 nm, comprise entre 15 et 200 nm, comprise entre 15 et 100 nm ou comprise entre 15 et 70 nm.

Par « épaisseur optique totale » on entend au sens de l'invention la somme de toutes les épaisseurs optiques des couches considérées, chaque épaisseur optique étant, comme expliqué ci-avant, le produit de l'épaisseur physique (ou réelle) de la couche avec son indice de réfraction mesuré à 550 nm.

Les couches diélectriques des revêtements présentent les caractéristiques suivantes seules ou en combinaison :
- elles sont déposées par pulvérisation cathodique assistée par champ magnétique,
- elles sont choisies parmi les oxydes, les nitrures ou les oxynitrures d'un ou plusieurs éléments choisi(s) parmi le titane, le silicium, l'aluminium, le zirconium, l'étain et le zinc,
- elles ont une épaisseur en général supérieure ou égale à 1 nm, supérieure à 2 nm, de préférence comprise entre 4 et 200 nm, de préférence comprise entre 5 et 100 nm.

Les couches diélectriques, outre leur fonction optique, peuvent avoir différentes autres fonctions. A titre d'exemple, on peut citer les couches stabilisantes, les couches de lissage, et les couches barrières.

Parmi les couches diélectriques, on distingue, en fonction de leur indice de réfraction à 550 nm, les couches à bas indice de réfraction, les couches d'indice de réfraction intermédiaire et les couches à haut indice de réfraction. Les couches à bas à bas indice de réfraction présentent un indice de réfraction inférieure à 2,00, de préférence inférieur à 1,70. Les couches d'indice de réfraction intermédiaire présentent un indice de réfraction compris entre 2,0 et 2,2. Les couches à haut indice de réfraction présentent un indice de réfraction supérieur à 2,2.

On entend par couche de mouillage, une couche en un matériau apte à stabiliser l'interface avec la couche fonctionnelle. Les couches de mouillage sont à base d'oxyde de zinc, éventuellement dopé à l'aide d'au moins un autre élément, comme l'aluminium. L'oxyde de zinc est cristallisé. La couche à base d'oxyde de zinc comprend, par ordre de préférence croissant au moins 90,0 %, au moins 92 %, au moins 95 %, au moins 98,0 % en masse de zinc par rapport à la masse d'éléments autres que de l'oxygène dans la couche à base d'oxyde de zinc.

Les couches de mouillage ont par ordre de préférence croissant, une épaisseur :
- d'au moins 3,0 nm, d'au moins 5,0 nm, et/ou
- d'au plus 25 nm, d'au plus 10 nm, d'au plus 8,0 nm.

La couche de mouillage peut se trouver directement au contact de la couche métallique fonctionnelle à base d'argent.

On entend par couche de lissage, une couche dont la fonction est de favoriser la croissance de la couche de mouillage selon une orientation cristallographique préférentielle, laquelle favorise la cristallisation de la couche d'argent par des phénomènes d'épitaxie. La couche de lissage est située en-dessous et de préférence au-contact d'une couche de mouillage.

La couche de lissage à base d'oxyde mixte peut être qualifiée de « non cristallisée » dans le sens où elle peut être complètement amorphe ou partiellement amorphe. La couche de lissage n'est pas être complètement cristallisée, sur toute son épaisseur. Elle ne peut être de nature métallique car elle est à base d'oxyde mixte (un oxyde mixte est un oxyde d'au moins deux éléments).

L'intérêt d'une telle couche de lissage est de permettre d'obtenir une interface avec la couche de mouillage qui est peu rugueuse. Cette faible rugosité est observable au microscope électronique à transmission. Par ailleurs, la couche de mouillage se texture mieux et présente en outre une orientation cristallographique préférentielle plus marquée.

Chaque couche de lissage est ainsi en un matériau différent, tant du point de vue cristallographique que stœchiométrique, de celui de la couche de mouillage sous laquelle elle est directement disposée.

De préférence, la couche de lissage, est une couche à base d'oxyde mixte d'au moins deux métaux choisis parmi Sn, Zn, In, Ga. Un oxyde mixte préféré est l'oxyde de zinc et d'étain. La couche de lissage est de préférence une couche d'oxyde mixte de zinc et d'étain éventuellement dopée.

L'indice de la couche de lissage est, de préférence, inférieur à 2,2. Par ailleurs, la couche de lissage présente de préférence une épaisseur entre 0,1 et 30 nm et de préférence encore comprise entre 0,2 et 10 nm.

Les couches de lissage ont par ordre de préférence croissant, une épaisseur :
- d'au moins 0,5 nm, d'au moins 1,0 nm, et/ou
- d'au plus 25 nm, d'au plus 15 nm, d'au plus 10 nm, d'au plus 8 nm.

La couche de mouillage est avantageusement directement au-contact de la couche métallique à base d'argent. Cela signifie que, dans ce cas, l'empilement ne comprend pas de couche de blocage sous la couche fonctionnelle à base d'argent.

Le revêtement diélectrique supérieur comporte, en outre, une couche à base d'oxyde de zinc (ZnO) disposée entre la couche métallique fonctionnelle à base d'argent et la succession d'au moins deux couches à indices décroissants.

De manière particulière chaque revêtement diélectrique peut comprendre au moins une couche haut-indice à base d'un oxyde ou nitrure, présentant un indice de réfraction supérieur à 2,20, de préférence supérieur à 2,25 et présentant de préférence une épaisseur supérieure à 5 nm.

Les couches à haut indice de réfraction peuvent présenter un indice de réfraction :
- supérieur à 2,25, supérieur à 2,30, supérieur à 2,35 ou supérieur à 2,40.
- inférieur à 2,60, inférieur à 2,50, inférieur à 2,40.

La couche haut-indice à base d'oxyde métallique peut être est choisie parmi les couches à base d'oxyde ou nitrure de titane, de zirconium, de niobium ou d'un alliage de métaux choisis dans le groupe constitué par Ti, Zn, Zr, Sn, Si et AI.

Les couches à haut indice de réfraction peuvent être choisies parmi :
- les couches à base d'oxyde de titane (n550=2,4),
- les couches à base d'oxyde mixte de titane et d'un autre composant choisi dans le groupe constitué par Zn, Zr et Sn,
- les couches à base une couche de nitrure de zirconium (n 550 = 2,55),
- les couches à base de nitrure de silicium et de zirconium (n550 nm = 2,20 - 2,40),
- les couches à base une couche d'oxyde de zirconium,
- les couches à base d'oxyde de manganèse MnO (n550 = 2,16),
- les couches à base une couche d'oxyde de tungstène (n550 = 2,15),
- les couches à base une couche d'oxyde de niobium (n550 = 2,30),
- les couches à base une couche d'oxyde de bismuth (n 550 = 2,60).

L'épaisseur de la couche haut-indice est par ordre de préférence croissant comprise entre 5 et 100 nm, entre 8 et 40 nm, entre 10 et 30 nm entre 15 et 25 nm.

De manière particulière, chaque revêtement diélectrique comprend au moins une couche diélectrique à base d'oxyde ou de nitrure et présentant un indice de réfraction inférieur à 2,20, de préférence inférieur à 2,15, de préférence inférieure à 2,05. Ces couches peuvent présenter une épaisseur supérieure à 3 nm. De tels couches sont des couches d'indice de réfraction intermédiaire.

Les couche à bas indice peuvent présenter un indice de réfraction inférieur à 1,70, inférieur à 1,6 ou inférieur à 1,5. Les couches à bas indice bas indice de réfraction sont de préférence des couches à base d'oxyde de silicium. Les couches à base d'oxyde de silicium sont de préférence constituées à plus de 80% en poids d'oxyde de silicium sur la base de la formulation de l'oxyde simple SiO₂, et éventuellement d'au moins un autre élément de préférence choisi dans le groupe constitué par Al, C, N, B, Sn, Zn et de manière très préférée parmi Al, B ou C. De préférence lesdites couches constituées essentiellement d'oxyde de silicium sont constituées à plus de 90% en poids d'oxyde de silicium, sur la base de la formulation de l'oxyde simple SiO₂.

Selon un mode de réalisation avantageux, le revêtement diélectrique supérieur comporte trois couches de diélectrique, successivement une couche haut indice, d'indice un couche d'indice intermédiaire et une couche bas indice ; la couche d'indice intermédiaire ayant une épaisseur :
- supérieure à l'épaisseur de la couche haut indice, et
- supérieure à l'épaisseur de la couche bas indice.

L'empilement de couches minces peut comprendre une seule couche fonctionnelle.

Un exemple d'empilement convenant selon l'invention comprend à partir du substrat les caractéristiques suivantes, seules ou en combinaison :
- un revêtement diélectrique inférieur comportant :
   - trois couches d'indice croissant avec une différence d'indice entre chaque couche successive d'au moins 0,15, de préférence d'au moins 0,20 ;
   - 2 à 15 nm, de préférence de 3 à 10 nm d'une couche présentant un indice compris entre 1,45 et 2,00 ;
   - 5 à 30 nm, de préférence de 10 à 20 nm d'une couche présentant un indice compris entre 1,80 et 2,30 ;
   - 5 à 30 nm, de préférence de 10 à 20 nm d'une couche présentant un indice compris entre 2,20 et 2,50 ;
   - une couche de lissage de 2 à 10 nm, de préférence de 3 à 8 nm ;
   - une couche de mouillage de 2 à 10 nm, de préférence de 3 à 8 nm ;
- une couche métallique fonctionnelle à base d'argent de 6 à 10 nm, de préférence de 7 à 8,5 nm ;
- une couche de blocage de 0,2 à 3 nm, de préférence de 0,5 à 2,5 nm ;
- un revêtement diélectrique supérieur, comportant :
   - une couche de ZnO de 4 à 15 nm, de préférence de 5 à 10 nm ;
   - trois couches d'indice décroissant avec une différence d'indice entre chaque couche successive d'au moins 0,15, de préférence d'au moins 0,20 :
      - 5 à 20 nm, de préférence de 10 à 15 nm d'une couche présentant un indice compris entre 2,20 et 2,50 ;
      - 5 à 50 nm, de préférence de 10 à 40 nm d'une couche présentant un indice compris entre 1,80 et 2,30 ;
      - 10 à 100 nm, de préférence de 15 à 80 nm d'une couche présentant un indice compris entre 1,45 et 2,00 ;
      - éventuellement une couche de protection, par exemple à base de 0,2 à 5 nm, de préférence de 0,5 à 3 nm de TiOx ou de SnZnO.

Avantageusement :
- la couche métallique fonctionnelle à base d'argent est située au-dessus et au contact de la couche de mouillage, et/ou
- la couche de mouillage est située au-dessus et au contact de la couche de lissage, et/ou
- la couche de lissage est située au-dessus et au contact d'une couche haut indice

L'empilement de couches minces peut éventuellement comprendre une couche de protection. La couche de protection est de préférence la dernière couche de l'empilement, c'est-à-dire la couche la plus éloignée du substrat revêtu de l'empilement (avant traitement thermique). Ces couches ont en général une épaisseur comprise entre 0,5 et 10 nm, de préférence 1 et 5 nm. Cette couche de protection peut être choisie parmi une couche de titane, de zirconium, d'hafnium, de zinc et/ou d'étain, ce ou ces métaux étant sous forme métallique, oxydée ou nitrurée.

Selon un mode de réalisation, la couche de protection est à base d'oxyde de zirconium et/ou de titane, de préférence à base d'oxyde de zirconium ou d'oxyde de titane et de zirconium.

Les substrats transparents selon l'invention sont de préférence en un matériau rigide minéral, comme en verre, ou organiques à base de polymères (ou en polymère).

Les substrats transparents organiques selon l'invention peuvent également être en polymère, rigides ou flexibles. Des exemples de polymères convenant selon l'invention comprennent, notamment :
- le polyéthylène,
- les polyesters tels que le polyéthylène téréphtalate (PET), le polybutylène téréphtalate (PBT), le polyéthylène naphtalate (PEN) ;
- les polyacrylates tels que le polyméthacrylate de méthyle (PMMA) ;
- les polycarbonates ;
- les polyuréthanes ;
- les polyamides ;
- les polyimides ;
- les polymères fluorés comme les fluoroesters tels que l'éthylène tétrafluoroéthylène (ETFE), le polyfluorure de vinylidène (PVDF), le polychlorotrifluorethylène (PCTFE), l'éthylène de chlorotrifluorethylène (ECTFE), les copolymères éthylène-propylène fluorés (FEP) ;
- les résines photoréticulables et/ou photopolymérisables, telles que les résines thiolène, polyuréthane, uréthane-acrylate, polyester-acrylate et
- les polythiouréthanes.

Le substrat est de préférence une feuille de verre ou de vitrocéramique.

Le substrat est de préférence transparent, incolore (il s'agit alors d'un verre clair ou extra-clair) ou coloré, par exemple en bleu, gris ou bronze. Le verre est de préférence de type silico-sodo-calcique, mais il peut également être en verre de type borosilicate ou alumino-borosilicate.

Le substrat possède avantageusement au moins une dimension supérieure ou égale à 1 m, voire 2 m et même 3 m. L'épaisseur du substrat varie généralement entre 0,5 mm et 19 mm, de préférence entre 0,7 et 9 mm, notamment entre 2 et 8 mm. Le substrat peut être plan ou bombé.

En double vitrage (DGU), en utilisant un second substrat (contre-verre) à faible teneur en fer, avec le même empilement, le facteur solaire peut encore être légèrement augmenté. De même avec un substrat en verre de type extra-clair, le facteur solaire est encore plus augmenté.

L'invention concerne également un vitrage multiple, notamment un vitrage feuilleté, ou double-vitrage ou triple vitrage, comportant au moins deux substrats transparents dont au moins un est selon la description ci-dessus.

Dans un vitrage multiple, on compte les faces en partant de l'extérieur du bâtiment vers l'intérieur du bâtiment. Dans un double vitrage, les faces 2 et 3 sont à l'intérieur du double vitrage.

De préférence, le vitrage multiple présente, dans une configuration 3/12/3 ; avec l'espace intercalaire rempli d'un mélange 90% argon et 10% air et la couche en face 3, un facteur solaire (SHGC) supérieur à 0,65, de préférence supérieur à 0,70, et de manière encore préférée supérieur à 0,72.

Dans cette même configuration, le vitrage présente de préférence un coefficient Ug inférieur à 0,36, de préférence inférieur à 0,34 et de manière encore préférée inférieur à 0,32.

En particulier au moins un des substrats est en verre, notamment silico-sodo-calcique comportant un taux de fer réduit.

Ces matériaux peuvent par ailleurs être intégrés dans des vitrages présentant en outre des fonctionnalités particulières, comme par exemple des vitrages chauffants.

L'invention concerne également un procédé d'obtention d'un matériau comprenant un substrat transparent revêtu d'un empilement de couches minces selon l'invention.

Le substrat revêtu de l'invention convient dans toutes applications nécessitant l'utilisation d'un empilement bas-émissif comprenant des couches d'argent pour lesquelles un facteur solaire élevé, une faible émissivité et bonne transmission lumineuse sont des paramètres clés.

Les exemples qui suivent illustrent l'invention sans toutefois la limiter.

### Exemples

### I. Nature des couches et revêtements déposés

Plusieurs types d'empilements de couches minces définis ci-après sont déposés sur des substrats en verre sodo-calcique clair d'une épaisseur de 2,9 mm, de manière connue, sur une ligne de pulvérisation cathodique (procédé magnétron) dans laquelle le substrat vient défiler sous différentes cibles.

Pour ces exemples, les conditions de dépôt des couches déposées par pulvérisation (pulvérisation dite « cathodique magnétron ») sont résumées dans le tableau 1 ci-dessous.

**[Tableau 1]**

| Tableau 1 | Cibles employées | Pression dépôt | Gaz | Indice |
|---|---|---|---|---|
| Si₃N₄ | Si:Al (92:8 % en pds) | 2-15*10⁻³ mbar | Ar 47 % - N₂ 53 % | 1,98 |
| SiZrAlN | Si:Al:Zr (70:8:22% at.) | 2 à 4.10⁻³ mbar | Ar 40-55 % - N₂ 45-60 % | 2,26 |
| SnZnOx | Sn:Zn (60:40% en pds) | 1,5*10⁻³ mbar | Ar 40-60 % - O₂ 40-60 % | 2,09 |
| ZnO | Zn :Al (98:2 % en pds) | 1,5*10⁻³ mbar | Ar 60 % - O₂ 40 % | 2,04 |
| Ag | Ag | 5 à 8*10⁻³ mbar | Ar à 100 % | - |
| Ti | Ti | 3*10⁻³ mbar | Ar à 100 % | - |
| SiO₂ | Si:Al (92:8 % en pds) | 2-5*10⁻³ mbar | Ar 100 % - O₂ 45-60% | 1,50 |
| TiO₂ | TiOx | 1,5.10-3 mbar | Ar 88 % - O2 12% | 2,45 |

| | | | | |
|---|---|---|---|---|
| at. : atomique ; pds : poids ; Indice : à 550 nm. | | | | |

Les tableaux 2 et 3 indiquent pour chaque substrat revêtu l'épaisseur physique des couches de l'empilement, exprimée en nm (sauf autres indications). La première ligne correspond à la couche la plus éloignée du substrat, en contact avec l'air libre.

**[Tableau 2]**

| Tableau 2 | | Comp. 1 | Comp. 2 | Comp.3 |
|---|---|---|---|---|
| Couche protectrice | TiOₓ | 1 | 1 | 1 |
| Couche bas indice | SiO₂ | - | - | - |
| Couche indice interm. | SiNₓ | - | - | - |
| Couche haut indice | SiZrNₓ | 41 | 45 | 44 |
| | ZnO | 8 | 8 | 8 |
| Couche de blocage | TiOₓ | 1 | 1 | 1 |
| Couche fonctionnelle | Ag | 8 | 8 | 8 |
| Couche de mouillage | ZnO | 5 | 5 | 5 |
| Couche de lissage | SnZnO | - | - | 5 |
| Couche haut indice | TiOₓ | - | 13 | 13 |
| Couche indice interm. | SiZrNₓ | 20 | 7 | 10 |
| Couche bas indice | SiNₓ | 22 | 16 | 4 |
| substrat | | | | |
| SHGC (%) | - | 71,9 | 72,3 | 72,4 |

**[Tableau 3]**

| Tableau 3 | | Ex. 1 | Ex. 2 | Ex 3 | Ex 4 | Ex 5 | Comp.6 |
|---|---|---|---|---|---|---|---|
| Couche protectrice | TiOₓ | 1 | 1 | 1 | 1 | 1 | 1 |
| Couche bas indice | SiO₂ | / | 7 | 15 | 46 | 15 | 15 |
| Couche indice interm. | SiNₓ | 29 | 27 | 22 | 15 | 22 | 22 |
| Couche haut indice | SiZrNₓ | 14 | 14 | 14 | 14 | 14 | 14 |
| | ZnO | 8 | 8 | 8 | 8 | 8 | 8 |
| Couche de blocage | TiOₓ | 1 | 1 | 1 | 1 | 1 | 1 |
| Couche fonctionnelle | Ag | 8 | 8 | 8 | 8 | 8 | 8 |
| Couche de mouillage | ZnO | 5 | 5 | 5 | 5 | 5 | 5 |
| Couche de lissage | SnZnO | 5 | 5 | 5 | 5 | 2 | 0 |
| Couche haut indice | TiOₓ | 13 | 13 | 13 | 13 | 13 | 13 |
| Couche indice interm. | SiZrNₓ | 14 | 14 | 14 | 14 | 14 | 10 |
| Couche bas indice | SiNₓ | 4 | 4 | 4 | 4 | 4 | 12 |
| substrat | | | | | | | |
| SHGC (%) | - | 72,7 | 72,8 | 72,9 | 73,6 | 72,7 | 72,5 |
| Rsq (ohm/carré) | - | 7,04 | 7,04 | 7,04 | - | 7,15 | 7,21 |

Dans le revêtement diélectrique inférieur, les couches SiNₓ, SiZrNₓ, TiOₓ ont des indices respectifs de 1,98, 2,26 et 2,45 soit croissants.

Dans le revêtement diélectrique supérieur, les couches SiZrNₓ, SiNₓ, SiO₂ ont des indices respectifs de 2,26, 1,98 et 1,50 soit décroissants.

### II. Configuration des doubles vitrages

Les substrats revêtus de l'empilement ont été assemblés en double vitrage, dans une configuration 3/12/3, avec un deuxième substrat (appelé contre-verre) en verre sodo-calcique clair, disposé côté extérieur du bâtiment ; le substrat revêtu étant disposé côté intérieur du bâtiment avec la couche en face 3. L'espace intercallaire est rempli d'un mélange 90% argon et 10% air.

### III. Performances optiques

Les caractéristiques suivantes ont été mesurées sur les configurations double vitrage et sont données dans le tableau 2:
- le facteur solaire: SHGC (Solar Heat Gain Coefficient) selon la norme NFRI 200-2017,
- la résistance par carré (Rsq) (en Ω/carré). Cette valeur est liée de manière linéaire à la valeur d'émissivité.

Le coefficient Ug est déduit de l'émissivité.

On augmentation de 0,2 points de pourcentage de facteur solaire constitue une amélioration significative.

La comparaison des vitrages Comp.1 et comp.2 montre que l'utilisation dans le revêtement diélectrique inférieur d'une séquence d'au moins 3 couches d'indice de refraction croissant (Comp.2) vs 2 couches d'indice de réfraction croissant (Comp.1) permet une augmentation du facteur solaire de 0,4 point de pourcentage.

L'utilisation d'une couche de lissage dans le revêtement diélectrique améliore encore le facteur solaire (comp.3 vs comp.2).

L'utilisation combinée d'au moins trois couches présentant un gradient croissant d'indice dans le revêtement diélectrique inférieur et d'au moins 2 couches présentant un gradient décroissant d'indice dans le revêtement diélectrique supérieur permet une augmentation du facteur solaire de 0,8 point de pourcentage (comp.1 vs Inv.1).

L'utilisation combinée d'au moins trois couches présentant un gradient croissant d'indice dans le revêtement diélectrique inférieur et d'au moins 3 couches présentant un gradient décroissant d'indice dans le revêtement diélectrique supérieur permet une augmentation du facteur solaire de 0,9 à 1,7 point de pourcentage (comp.1 vs Inv.2, Inv.3 et Inv.4).

Enfin, les exemples Inv.3, Inv.5 et Comp.6 mettent en évidence l'influence d'une couche de lissage à base de SnZnO dans le revetement diélectrique inférieur. On obderve là encore un gain en facteur solaire mais surtout une diminution de la résistance par carré.

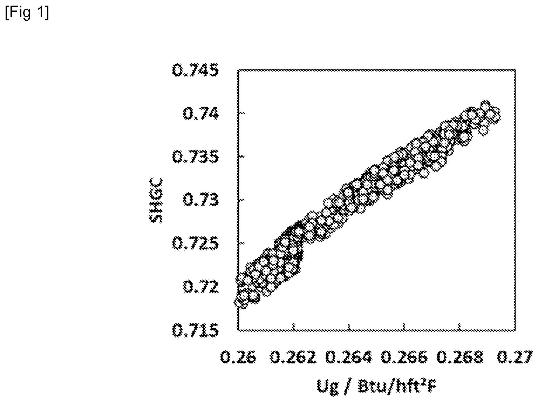

La fig.1 représente la relation entre le facteur solaire SHGC et le coefficient d'isolation thermique Ug pour les différentes simulations selon l'invention. Le coefficient Ug varie de 0,22 à 0,31 Btu/hft²F lorsque le facteur solaire SHGC varie de 0,720 à 0,757.

Dans la même configuration de double vitrage, avec l'empilement selon l'exemple 3 en face 3, si le contre-verre en verre sodo-calcique clair est remplacé par un verre à faible teneur en Fer, le facteur solaire passe de 72,9 à 74,2, et si le contre-verre est remplacé par un verre extra clair, le facteur solaire passe à 75,7.

Dans la même configuration de double vitrage, avec l'empilement selon l'exemple 3 en face 3, avec le mélange Argon-air 90-10, le coefficient Ug est à 0,263. Si l'on remplace le mélange par :
- 100% air, le coefficient Ug passe à 0,311,
- 100% Argon, le coefficient Ug passe à 0,258,
- 100% Krypton, le coefficient Ug passe à 0,242,
- 100% Xénon, le coefficient Ug passe à 0,226.

Il est donc démontré que le coefficient Ug dépend fortement de la composition du gaz remplissant la cavité du double vitrage.

## Revendications

1. Substrat transparent revêtu d'un empilement de couches minces comprenant, à partir du substrat, un revêtement diélectrique inférieur, une couche métallique fonctionnelle à base d'argent et un revêtement diélectrique supérieur, chaque revêtement diélectrique comportant plusieurs couches diélectriques, **caractérisé en ce que** :
- le revêtement diélectrique inférieur comprend à partir du substrat :
une succession d'au moins trois couches diélectriques ayant des indices de réfraction croissants, la différence d'indice entre chaque couche successive étant au moins de 0,15, une couche de lissage et une couche de mouillage, de préférence à base d'oxyde de zinc,
- le revêtement diélectrique supérieur comprend à partir du substrat :
une couche à base d'oxyde de zinc et une succession d'au moins deux couches ayant des indices de réfraction décroissants, la différence d'indice entre chaque couche successive étant au moins de 0,15.

2. Substrat selon la revendication 1 **caractérisé en ce que** les trois couches diélectriques ayant des indices de réfraction croissants du revêtement diélectrique inférieur présentent chacune une épaisseur supérieure à 3 nm.

3. Substrat selon l'une quelconque des revendications précédentes **caractérisé en ce que** les deux couches diélectriques ayant des indices de réfraction décroissants du revêtement diélectrique inférieur présentent chacune une épaisseur supérieure à 3 nm.

4. Substrat selon l'une quelconque des revendications précédentes, **caractérisé en ce que** la couche de lissage est à base d'un oxyde mixte comprenant au moins deux métaux choisis parmi l'étain Sn, le zinc Zn, le gallium Ga et l'indium In, de préférence une couche d'oxyde mixte à base de Sn et de Zn.

5. Substrat selon l'une quelconque des revendications précédentes **caractérisé en ce que** le revêtement diélectrique supérieur comprend une succession d'au moins trois couches d'indices décroissants, chacune d'épaisseur supérieure à 5 nm, dont la différence d'indice est supérieure à 0,15, voire supérieure à 0,20.

6. Substrat selon l'une quelconque des revendications précédentes **caractérisé en ce que** le revêtement diélectrique supérieur comprend une couche d'indice de réfraction inférieure à 1,70 et présentant une épaisseur supérieure à 5 nm ou 10 nm.

7. Substrat selon l'une quelconque des revendications précédentes **caractérisé en ce que** le revêtement diélectrique inférieur comprend :
- une couche diélectrique présentant un indice de réfraction inférieur 2,20 choisie parmi les couches à base de nitrure de silicium,
- une couche diélectrique présentant un indice de réfraction compris entre 2,20 à 2,40 choisie parmi les couches à base de nitrure de silicium et de zirconium, de préférence située au contact de la couche de nitrure de silicium,
- une couche diélectrique présentant un indice de réfraction supérieur à 2,40 choisie parmi les couches à base d'oxyde, de préférence située au contact de la couche de nitrure de silicium et de zirconium,
- une couche de lissage à base d'oxyde de zinc et d'étain, de préférence située au contact de la couche à base d'oxyde,
- une couche de mouillage à base d'oxyde de zinc, de préférence située au contact de la couche à base d'oxyde de zinc et d'étain.

8. Substrat selon l'une quelconque des revendications précédentes **caractérisé en ce que** le revêtement diélectrique supérieur comprend :
- une couche à base d'oxyde de zinc,
- une couche diélectrique présentant un indice de réfraction supérieur 2,20,
- une couche diélectrique présentant un indice de réfraction inférieur à 2,20,
- éventuellement une couche diélectrique présentant un indice de réfraction inférieur à 1,70.

9. Substrat selon l'une quelconque des revendications précédentes **caractérisé en ce que** le revêtement diélectrique supérieur comprend :
- une couche à base d'oxyde de zinc,
- une couche diélectrique présentant un indice de réfraction supérieur 2,20 choisie parmi les couches à base de nitrure de silicium et de zirconium, de préférence située au contact de la couche à base d'oxyde de zinc,
- une couche diélectrique présentant un indice de réfraction inférieur à 2,20 choisie parmi les couches à base de nitrure de silicium, de préférence située au contact de la couche à base de nitrure de silicium et de zirconium,
- une couche diélectrique présentant un indice de réfraction inférieur à 1,70 choisie parmi les couches à base d'oxyde de silicium, de préférence située au contact de la couche à base de nitrure de silicium.

10. Substrat selon l'une quelconque des revendications précédentes **caractérisé en ce que** l'empilement comporte, en outre, une couche de blocage déposée directement sur la couche métallique fonctionnelle à base d'argent, dont l'épaisseur est inférieure à 5,0 nm, inférieure à 4,0 nm, inférieure à 3,0 nm, inférieure à 2,5 nm, inférieure à 2,0 nm, de manière encore préférée inférieure à 1,5 nm.

11. Substrat selon l'une quelconque des revendications précédentes **caractérisé en ce que** la couche métallique fonctionnelle à base d'argent a une épaisseur comprise entre 5 et 20 nm, de préférence entre 6 et 10 nm, de manière encore préférée entre 7 et 8,5 nm.

12. Vitrage multiple comportant au moins deux substrats transparents dont au moins un est selon l'une quelconque des revendications précédentes.

13. Vitrage selon la revendication précédente, **caractérisé en ce qu'**il présente, dans une configuration 3/12/3 ; avec l'espace intercalaire rempli d'un mélange 90% argon et 10% air et la couche en face 3, un facteur solaire (SHGC) supérieur à 0,65, de préférence supérieur à 0,70, et de manière encore préférée supérieur à 0,72.

14. Vitrage selon l'une quelconque des revendications 13 et 14, **caractérisé en ce qu'**il présente, dans une configuration 3/12/3 ; avec l'espace intercalaire rempli d'un mélange 90% argon et 10% air et la couche en face 3, un coefficient Ug inférieur à 0,36, de préférence inférieur à 0,34 et de manière encore préférée inférieur à 0,32.

15. Vitrage selon l'une quelconque des revendications 13 à 15, **caractérisé en ce que** un au moins des substrats est en verre, notamment silico-soda-calcique comportant un taux de fer réduit.

## Patentansprüche

1. Transparentes Substrat, beschichtet mit einer Stapelung an Dünnschichten, umfassend, beginnend mit dem Substrat, eine untere dielektrische Beschichtung, eine funktionelle metallische Schicht auf Silberbasis und eine obere dielektrische Beschichtung, wobei jede dielektrische Beschichtung mehrere dielektrische Schichten vorweist, **dadurch gekennzeichnet, dass:**
- die untere dielektrische Beschichtung beginnend mit dem Substrat umfasst:
eine Abfolge von mindestens drei dielektrischen Schichten, die steigende Brechungsindizes besitzen, wobei der Indexunterschied zwischen jeder aufeinanderfolgenden Schicht mindestens 0,15 beträgt, eine Glättungsschicht und eine Benetzungsschicht, vorzugsweise auf Basis von Zinkoxid,
- die obere dielektrische Beschichtung beginnend mit dem Substrat umfasst:
eine Schicht auf Basis von Zinkoxid und eine Abfolge von mindestens zwei Schichten, die fallende Brechungsindizes besitzen, wobei der Indexunterschied zwischen jeder aufeinanderfolgenden Schicht mindestens 0,15 beträgt.

2. Substrat nach Anspruch 1, **dadurch gekennzeichnet, dass** die drei dielektrischen Schichten, die steigende Brechungsindizes besitzen, der unteren dielektrischen Beschichtung jeweils eine Dicke von mehr als 3 nm aufweisen.

3. Substrat nach einem der vorstehenden Ansprüche,
**dadurch gekennzeichnet, dass** die zwei dielektrischen Schichten, die fallende Brechungsindizes besitzen, der unteren dielektrischen Beschichtung jeweils eine Dicke von mehr als 3 nm aufweisen.

4. Substrat nach einem der vorstehenden Ansprüche,
**dadurch gekennzeichnet, dass** die Glättungsschicht auf einem Mischoxid basiert, umfassend mindestens zwei Metalle, die aus Zinn Sn, Zink Zn, Gallium Ga und Indium In, vorzugsweise einer Mischoxidschicht auf Basis von Sn und Zn, ausgewählt sind.

5. Substrat nach einem der vorstehenden Ansprüche,
**dadurch gekennzeichnet, dass** die obere dielektrische Beschichtung eine Abfolge von mindestens drei Schichten mit fallenden Indizes umfasst, wobei jede eine Dicke von mehr als 5 nm aufweist, wobei der Indexunterschied mehr als 0,15 oder sogar mehr als 0,20 beträgt.

6. Substrat nach einem der vorstehenden Ansprüche,
**dadurch gekennzeichnet, dass** die obere dielektrische Beschichtung mindestens eine Brechungsindexschicht, die weniger als 1,70 beträgt und eine Dicke von mehr als 5 nm oder 10 nm aufweist, umfasst.

7. Substrat nach einem der vorstehenden Ansprüche,
**dadurch gekennzeichnet, dass** die untere dielektrische Beschichtung umfasst:
- eine dielektrische Schicht, die einen Brechungsindex von weniger als 2,20 aufweist, die aus den Schichten auf Basis von Siliciumnitrid ausgewählt ist,
- eine dielektrische Schicht, die einen Brechungsindex, der zwischen 2,20 und 2,40 liegt, aufweist, die aus den Schichten auf Basis von Siliciumnitrid und Zirkonium ausgewählt ist, die vorzugsweise mit der Siliciumnitridschicht in Berührung liegt,
- eine dielektrische Schicht, die einen Brechungsindex von mehr als 2,40 aufweist, die aus den Schichten auf Basis von Oxid ausgewählt ist, die vorzugsweise mit der Schicht aus Siliziumnitrid und Zirkonium in Berührung liegt,
- eine Glättungsschicht auf Basis von Zink- und Zinnoxid, die vorzugsweise mit der Schicht auf Basis von Oxid in Berührung liegt,
- eine Benetzungsschicht auf Basis von Zinkoxid, die vorzugsweise mit der Schicht auf Basis von Zink- und Zinnoxid in Berührung liegt.

8. Substrat nach einem der vorstehenden Ansprüche,
**dadurch gekennzeichnet, dass** die obere dielektrische Beschichtung umfasst:
- eine Schicht auf Basis von Zinkoxid,
- eine dielektrische Schicht, die einen Brechungsindex von mehr als 2,20 aufweist,
- eine dielektrische Schicht, die einen Brechungsindex von weniger als 2,20 aufweist,
- optional eine dielektrische Schicht, die einen Brechungsindex von weniger als 1,70 aufweist.

9. Substrat nach einem der vorstehenden Ansprüche,
**dadurch gekennzeichnet, dass** die obere dielektrische Beschichtung umfasst:
- eine Schicht auf Basis von Zinkoxid,
- eine dielektrische Schicht, die einen Brechungsindex von mehr als 2,20 aufweist, die aus den Schichten auf Basis von Siliciumnitrid und Zirkonium ausgewählt ist, die vorzugsweise mit der Schicht auf Basis von Zinkoxid in Berührung liegt,
- eine dielektrische Schicht, die einen Brechungsindex von weniger als 2,20 aufweist, die aus den Schichten auf Basis von Siliciumnitrid ausgewählt ist, die vorzugsweise mit der Schicht auf Basis von Siliciumnitrid und Zirkonium in Berührung liegt,
- eine dielektrische Schicht, die einen Brechungsindex von weniger als 1,70 aufweist, die aus den Schichten auf Basis von Siliciumoxid ausgewählt ist, die vorzugsweise mit der Schicht auf Basis von Siliciumnitrid in Berührung liegt.

10. Substrat nach einem der vorstehenden Ansprüche,
**dadurch gekennzeichnet, dass** die Stapelung ferner eine Sperrschicht, die auf der funktionellen metallischen Schicht auf Silberbasis direkt aufgebracht ist, deren Dicke weniger als 5,0 nm, weniger als 4,0 nm, weniger als 3,0 nm, weniger als 2,5 nm, weniger als 2,0 nm, auf noch mehr bevorzugter Weise weniger als 1,5 nm beträgt, vorweist.

11. Substrat nach einem der vorstehenden Ansprüche,
**dadurch gekennzeichnet, dass** die funktionelle metallische Schicht auf Silberbasis eine Dicke, die zwischen 5 und 20 nm, vorzugsweise zwischen 6 und 10 nm, auf noch mehr bevorzugter Weise zwischen 7 und 8,5 nm liegt, aufweist.

12. Mehrfachverglasung, die mindestens zwei transparente Substrate vorweist, wobei mindestens eines nach einem der vorstehenden Ansprüche ist.

13. Verglasung nach dem vorstehenden Anspruch,
**dadurch gekennzeichnet, dass** sie in einer 3/12/3-Konfiguration, wobei der Zwischenschichtraum mit einer Mischung aus 90 % Argon und 10 % Luft gefüllt und die Schicht auf Fläche 3 ist, einen Solarfaktor (SHGC) von mehr als 0,65, vorzugsweise mehr als 0,70 und auf noch mehr bevorzugter Weise mehr als 0,72 aufweist.

14. Verglasung nach einem der Ansprüche 13 und 14,
**dadurch gekennzeichnet, dass** sie in einer 3/12/3-Konfiguration, wobei der Zwischenschichtraum mit einer Mischung aus 90 % Argon und 10 % Luft gefüllt und die Schicht auf Fläche 3 ist, einen Koeffizienten Ug von weniger als 0,36, vorzugsweise weniger als 0,34 und auf noch mehr bevorzugter Weise weniger als 0,32 aufweist.

15. Verglasung nach einem der Ansprüche 13 bis 15,
**dadurch gekennzeichnet, dass** mindestens eines der Substrate aus Glas, insbesondere aus Kalk-Natron-Silicatglas mit einem reduziertem Eisengehalt, ist.

## Claims

1. A transparent substrate coated with a stack of thin layers comprising, starting from the substrate, a bottom dielectric coating, a silver-based functional metal layer and a top dielectric coating, each dielectric coating comprising several dielectric layers, **characterized in that**:
- the bottom dielectric coating comprises, starting from the substrate:
a series of at least three dielectric layers having increasing refractive indices, the index difference between each successive layer being at least 0.15, a smoothing layer and a wetting layer, preferably based on zinc oxide,
- the bottom dielectric coating comprises, starting from the substrate:
a zinc-oxide-based layer and a series of at least two layers having decreasing refractive indices, the index difference between each successive layer being at least 0.15.

2. The substrate according to claim 1, **characterized in that** the three dielectric layers having increasing refractive indices of the bottom dielectric coating each have a thickness of greater than 3 nm.

3. The substrate according to any one of the preceding claims, **characterized in that** the two dielectric layers having decreasing refractive indices of the bottom dielectric coating each have a thickness of greater than 3 nm.

4. The substrate according to any one of the preceding claims, **characterized in that** the smoothing layer is based on a mixed oxide comprising at least two metals chosen from tin Sn, zinc Zn, gallium Ga and indium In, preferably a mixed oxide layer based on Sn and Zn.

5. The substrate according to any one of the preceding claims, **characterized in that** the top dielectric coating comprises a succession of at least three layers of decreasing indices, each of a thickness greater than 5 nm, the index difference of which is greater than 0.15, or even greater than 0.20.

6. The substrate according to any one of the preceding claims, **characterized in that** the top dielectric coating comprises a layer with a refractive index of less than 1.70 and having a thickness of greater than 5 nm or 10 nm.

7. The substrate according to any one of the preceding claims, **characterized in that** the bottom dielectric coating comprises:
- a dielectric layer having a refractive index lower than 2.20 chosen from the layers based on silicon nitride,
- a dielectric layer having a refractive index of between 2.20 to 2.40 chosen from the zirconium-silicon-nitride-based layers, preferably located in contact with the layer of silicon nitride,
- a dielectric layer having a refractive index greater than 2.40 chosen from layers based on oxide, preferably located in contact with the layer of zirconium silicon nitride,
- a smoothing layer based on zinc tin oxide, preferably located in contact with the oxide-based layer,
- a wetting layer based on zinc oxide, preferably located in contact with the zinc-tin-oxide-based layer.

8. The substrate according to any one of the preceding claims, **characterized in that** the bottom dielectric coating comprises:
- a zinc-oxide-based layer,
- a dielectric layer having a refractive index greater than 2.20,
- a dielectric layer having a refractive index lower than 2.20,
- potentially a dielectric layer having a refractive index lower than 1.70.

9. The substrate according to any one of the preceding claims, **characterized in that** the bottom dielectric coating comprises:
- a zinc-oxide-based layer,
- a dielectric layer having a refractive index greater than 2.20 chosen from zirconium-silicon-nitride-based layers, preferably located in contact with the zinc-oxide-based layer,
- a dielectric layer having a refractive index lower than 2.20 chosen from the layers based on silicon nitride, preferably located in contact with the zirconium silicon nitride-based layer,
- a dielectric layer having a refractive index lower than 1.70 chosen from the layers based on silicon oxide, preferably located in contact with the silicon nitride-based layer.

10. The substrate according to any one of the preceding claims, **characterized in that** the stack further includes a blocking layer deposited directly on the silver-based functional metal layer, the thickness of which is less than 5.0 nm, less than 4.0 nm, less than 3.0 nm, less than 2.5 nm, less than 2.0 nm, even more preferably less than 1.5 nm.

11. The substrate according to any one of the preceding claims, **characterized in that** the silver-based functional metal layer has a thickness between 5 and 20 nm, preferably between 6 and 10 nm, and still more preferably between 7 and 8.5 nm.

12. A multiple glazed unit including at least two transparent substrates, at least one of which is according to any one of the preceding claims.

13. The glazed unit according to the preceding claim, **characterized in that** it has, in a 3/12/3 configuration, with the interlayer space filled with a mixture 90% argon and 10% air and the layer on Face 3, a solar factor (SHGC) greater than 0.65, preferably greater than 0.70, and even more preferably greater than 0.72.

14. The glazed unit according to one of claims 13 and 14, **characterized in that** it has, in a 3/12/3 configuration, with the interlayer space filled with a mixture 90% argon and 10% air and the layer on Face 3, a coefficient Ug less than 0.36, preferably less than 0.34, and even more preferably less than 0.32.

15. The glazed unit according to any one of claims 13 to 15, **characterized in that** at least one of the substrates is made of glass, in particular soda-lime-silica, including a reduced iron content.
